# EUROPEAN PATENT APPLICATION

(11) **EP 2 498 176 A2**
(43) Date of publication of application: **12.09.2012**
(21) Application number: 12156509.7
(22) Date of filing: 22.02.2012
(51) Int. Cl.: G06F 3/048

(54) **Input processing apparatus, input processing method, and program**

(30) Priority: 10.03.2011 JP 2011052518
(71) Applicant: Sony Corporation, Tokyo 108-0075 (JP)
(72) Inventor: Morita, Takao, Tokyo, 108-0075 (JP)
(74) Representative: Beder, Jens

(57) **Abstract**

An information processing apparatus including a display control unit that controls a display to display a plurality of objects, and an input target recognition unit that iteratively calculates an input target on the display based on a plurality of positions corresponding to an input received from a start position of the input to a current position of the input.

## Description

### CROSS REFERENCE TO RELATED APPLICATION

This application claims the benefit of priority under 35 U.S.C. § 119 to Japanese Priority Patent Application JP 2011-052518 filed in the Japan Patent Office on March 10, 2011, the entire contents of which are hereby incorporated by reference.

### BACKGROUND

The present disclosure relates to an input processing apparatus, an input processing method, and a program, and particularly to a technique for input processing corresponding to an input operation using a display screen.

User inputs for various operations based on a touch panel scheme have generally been performed by causing a display screen such as a liquid crystal panel, for example, to display images for operations such as an icon and the like. In addition, all of the various images for operations such as an icon, a menu item, a key display, and the like will be referred to as "objects" in this specification.

The input based on the touch panel scheme is performed by the user pressing an object display part on the screen in many cases. For example, when an object corresponding to a function for "processing A" is pressed, the operation for the "processing A" is finalized (entered), and the function for the "processing A" is activated.

Alternatively, input may also be performed by selecting an object at a stage prior to a certain entering operation. When an operation for selecting a certain object is performed, the object is brought to be in a selected state, and the processing corresponding to the selected object is activated by the finalization (entering) operation following the selecting operation.

Japanese Unexamined Patent Application Publication No. 2009-110135 discloses a technique in which an intersection between cursor operation tracks on the screen is detected, a closed space is extracted from the operation tracks when an intersection point is generated, and an object in the closed space is brought to be in a selected state.

### SUMMARY

Various aspects and features of the invention are defined in the appended claims.

Incidentally, it is necessary to allow a user to perform an operation which the user can easily be familiar with, namely an intuitive operation in the operation scheme in which a sequential operation input such as a touch panel operation or the like can be performed on the display screen. From this viewpoint, a problem still remains in the technique according to Japanese Unexamined Patent Application Publication No. 2009-110135, for example, while the technique makes it possible to perform an intuitive operation. For example, an object as a selection target is not specified if there is no closed space of operation tracks. Therefore, it is necessary for a user to perform a predetermined operation for the selection. For example, when the user does not create an intersection point of the input tracks, the selecting operation is not established. When the object is displayed at the end of the screen, there is a case where an intersection point is not created since it is difficult to input tracks which surround the object, that is, a case where the selection is not established. Moreover, it is necessary to expend time since it is necessary for the user to create an intersection point such that a closed space is created.

It is desirable to provide a more satisfactory operability and an easily understandable operability for a user when inputs for various operations such as the selection, the finalization, and the like are performed on the objects on the display screen.

According to a first exemplary embodiment, the disclosure is directed to an information processing apparatus including a display control unit that controls a display to display a plurality of objects, and an input target recognition unit that iteratively calculates an input target on the display based on a plurality of positions corresponding to an input received from a start position of the input to a current position of the input.

According to another exemplary embodiment, the disclosure is directed to an information processing method performed by an information processing apparatus. The method including controlling a display to display a plurality of objects, and iteratively calculating, by a processor of the information processing apparatus, an input target on the display based on a plurality of positions corresponding to an input received from a start of the input to a current position of the input.

According to another exemplary embodiment, the disclosure is directed to a computer-readable medium including computer program instructions, which when executed by an information processing apparatus, cause the information processing apparatus to perform a method. The method including controlling a display to display a plurality of objects, and iteratively calculating an input target on the display based on a plurality of positions corresponding to an input received from a start of the input to a current position of the input.

The technique of the present disclosure relates to an input on a display screen such as a touch panel or the like, and it is possible to provide an easily understandable intuitive operability and a responsive operability for a user.

### BRIEF DESCRIPTION OF THE DRAWINGS

Embodiments of the invention will now be described with reference to the drawings throughout like reference denote like parts and in which
Fig. 1 is a block diagram of a basic configuration of an input processing apparatus according to an embodiment of the present disclosure;
Fig. 2 is a block diagram of an electronic device provided with an input processing apparatus according to an embodiment;
Fig. 3 is an explanatory diagram of an example of a display screen according to an embodiment;
Figs. 4A and 4B are explanatory diagrams of display examples of an object in a selected state according to an embodiment;
Fig. 5 is a flowchart of input processing according to a first embodiment;
Figs. 6A and 6B are explanatory diagrams of an input operation state according to the first embodiment;
Figs. 7A and 7B are explanatory diagrams of an input operation state according to the first embodiment;
Figs. 8A and 8B are explanatory diagrams of an input operation state according to the first embodiment;
Fig. 9 is a flowchart of input processing according to a second embodiment;
Figs. 10A to 10D are explanatory diagrams of a display example at the time of an input operation according to the second embodiment;
Figs. 11A to 11D are explanatory diagrams of a display example at the time of an input operation according to the second embodiment;
Figs. 12A to 12D are explanatory diagrams of a display example at the time of an input operation according to the second embodiment;
Figs. 13A to 13D are explanatory diagrams of a display example at the time of an input operation according to the second embodiment;
Figs. 14A to 14D are explanatory diagrams of a display example at the time of an input operation according to the second embodiment;
Fig. 15 is a flowchart of input processing according to a third embodiment;
Figs. 16A to 16D are explanatory diagrams of an input operation state according to the third embodiment; and
Figs. 17A to 17D are explanatory diagrams of an input operation state according to the third embodiment.

### DETAILED DESCRIPTION OF EMBODIMENTS

Hereinafter, embodiments of the present disclosure will be described in the following order.
<1. Basic Configuration of Input Processing Apparatus According to Embodiment>
<2. Basic Configuration of Electronic Device Provided with Input Processing Apparatus>
<3. Input Processing According to First Embodiment>
   [3-1: Processing Procedure]
   [3-2: Selecting Operation Example by Input Target Position Recognition]
   [3-3: Selecting Operation Example by Input Target Area Recognition]
   [3-4: Conclusion of First Embodiment]
<4. Input Processing According to Second Embodiment>
   [4-1: Processing Procedure]
   [4-2: Display Example of Input Target Position During Operations]
   [4-3: Display Example of Input Target Area During Operations]
   [4-4: Conclusion of Second Embodiment]
<5. Input Processing According to Third Embodiment>
   [5-1: Processing Procedure]
   [5-2: Example of Acceptance in Processing in Accordance with Directionality]
<6. Program>
<7. Modified Example>

### <1. Basic Configuration of Input Processing Apparatus According to Embodiment>

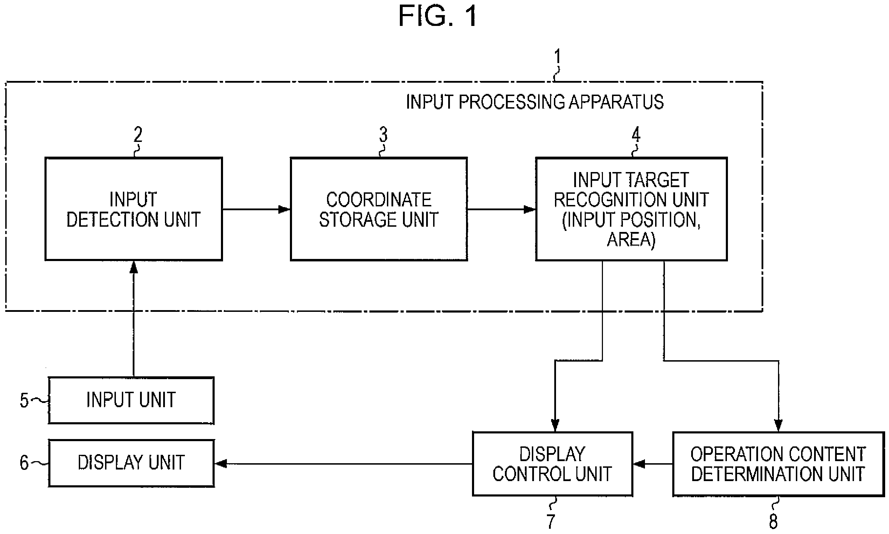

The basic configuration of an input processing apparatus according to an embodiment will be described with reference to Fig. 1. The input processing apparatus 1 is provided with an input detecting unit 2, a coordinate storage unit 3, and an input target recognition unit 4 as a minimum configuration.

Although a display control unit 7 and an operation content determination unit 8 are shown in Fig. 1, the display control unit 7 and the operation content determination unit 8 are included in the configuration as the input processing apparatus 1 in some cases.

Such components (the input detecting unit 2, the coordinate storage unit 3, and the input target recognition unit 4, and in addition, the display control unit 7 and the operation content determination unit 8 depending on a case) of the input processing apparatus 1 can respectively be realized as hardware, or can be realized as software which functions in a microcomputer or the like provided with a CPU (Central Processing Unit), for example.

Although a display unit 6 and an input unit 5 are shown in Fig. 1, the input processing apparatus 1 of the embodiment is mounted on a device integrally with such parts in some cases or is configured as a separate device in other cases.

Each configuration shown in Fig. 1 will be described. The display unit 6 is a part which displays for a user an image on a display device such as a liquid crystal display apparatus, an organic EL (electroluminescence) display apparatus, a plasma display apparatus, a CRT display apparatus, or the like.

The display operation of the display unit 6 is controlled by the display control unit 7 and performs various kinds of display. Particularly, display of objects such as icons and the like is performed in response to the input to the touch panel.

The input unit 5 is configured by a touch panel device or the like, for example to detect a user touch input or the like with respect to the display unit 6. The input unit 5 is a touch sensor unit, for example, which is attached to the screen of the display unit 6.

The input processing of the present disclosure can be applied not only to a touch panel scheme but also to an input by a pointing device by light irradiation or an input by a mouse. Therefore, the input unit 5 is configured to be an optical sensor array which detects an optical input position by a pointing device on the screen in some cases or configured to be a mouse or a detecting unit which detects a mouse operation in other cases.

The input detecting unit 2 constituting the input processing apparatus 1 detects an input to the display screen of the display unit 6 to obtain input position information. That is, the input detecting unit 2 detects a user touch operation from the detection information of the input unit 5 and performs processing of converting the touch position into a set of coordinate values in an X-Y coordinate plane corresponding to a screen plane.

The coordinate storage unit 3 stores the set of coordinate values detected by the input detecting unit 2 as input position information. Particularly, in the case of a sequential input by the user, the coordinate storage unit 3 sequentially receives the sets of coordinates from the input detecting unit 2 and maintains a series of groups of coordinates. For example, when the user performs a touch operation so as to trace the screen surface with a finger from a certain position as a start point on the screen as the sequential input, for example, the input detecting unit 2 successively detects sets of coordinate values relating to the user inputs while the coordinate storage unit 3 successively stores such sets of coordinate values.

The input target recognition unit 4 recognizes a position or an area as a target (intended by the user) of the user touch operation by calculation processing with the use of the set of coordinate values (input position information) stored in the coordinate storage unit 3. For example, it is possible to determine a unique set of coordinates by calculating a gravity center of a series of groups of coordinates. Alternatively, it is possible to determine an area on the plane by creating a closed space from the series of groups of coordinates.

Then, when the user performs a touch operation so as to press a certain position on the screen, the input target recognition unit 4 causes the input detecting unit 2 to detect the set of coordinate values of the position and causes the coordinate storage unit 3 to store the set of coordinate values. In such a case, the input target recognition unit 4 determines an input target position (or an input target area) by the user from the single set of coordinate values.

In addition, the user performs a sequential input operation with respect to the display screen of the display unit 6 in some cases. For example, an input of operation so as to trace the screen surface corresponds thereto. In such a case, the coordinates are successively stored by the coordinate storage unit 3 during the input from the start to the end of the input of operations as described above. The input target recognition unit 4 calculates the input target position or the input target area on the display screen from each input position information piece stored at the time point, at each time point during the input operation. Moreover, when the sequential touch operation by the user is completed (when the finger of the user is separated from the display screen, for example) the input target position or the input target area calculated from each set of coordinate values stored at the time point is recognized as the input target position or the input target area by the sequentially input operation.

The display control unit 7 controls the display content of the display unit 6. For example, the display control unit 7 causes the display unit 6 to execute the display of a necessary object in response to the instruction of various applications.

According to the second embodiment which will be described later, the display control unit 7 performs display control processing of performing the display in response to the input operation on the display screen of the display unit 6 during the sequential input operations by the user. For example, highlighted display of the operation track, the input target position or the input target area obtained at each time point, an object, or the like is performed as will be described later.

It is possible to feed back a series of operations to the user in real time by performing the display control based on the recognition information (information regarding the input target position or the input target area) from the input target recognition unit 4 even if a series of input operations by the user is not completed. This functions so as to remind the user of which coordinates or area the user is pointing at now.

The operation content determination unit 8 has a processing function relating to the determination processing for the input content such as "selection", "finalization", or the like of the object, for example.

For example, when the series of input operations by the user is completed, the operation content determination unit 8 can be realized as a UI application which determines the operation content based on the coordinates or the area (the input target position or the input target area) in the notification from the input target recognition unit 4.

The operation content determination unit 8 determines the content of the operation and performs the selecting processing and the entering processing on the UI (user interface) object in response to the determination.

For example, the operation content determination unit 8 brings an object which is present at the set of coordinates in the notification to be in the selected state or brings an object included in the area in the notification to be in the selected state. When there are a plurality of objects which can be selected in the area in the notification, an object which is located at the closest position to the coordinates in the notification may be brought to be in the selected state in the same manner.

Another application is also possible in which one object is selected by the coordinates and the area in the notification when the series of the operations by the user is performed in the clockwise direction while all of the plurality of objects included in the area are brought to be in the selected state when the series of the operations by the user is performed in the counterclockwise direction, as will be described later in the third embodiment.

Each component shown in Fig. 1 is included in the basic configuration of the input processing apparatus 1 according to the present disclosure or the related peripheral configuration.

With such a configuration, the coordinates of each input position information until the end of the input are stored in the coordinate storage unit 3 at the time of the sequential input by the touch panel input or the like. Then, the input target recognition unit 4 successively calculates the input target position or the input target area which the user intends to designate by a sequential touch operation, based on each set of coordinate values until the time point, at each time point until the end of the input.

The user arbitrarily ends the sequential input operation, and the input target position or the input target area obtained at the time point at which the operation input is ended is recognized as a position or an area which the user intends to designate by the user by the last sequential input. Since the input target position or the input target area is successively calculated during the input operation, it is possible to determine the last input target position or the last target area even if the user ends the input operation at arbitrary timing.

In addition, if the display control relating to the input target position or the input target area which is successively calculated is performed by the display control unit 7, it is possible to provide a more satisfactory operability to the user.

Moreover, if the operation content determination unit 8 determines the operation content, which the user desires, in accordance with the directionality of the input operation as well as the input target position or the input target area, it is possible to provide various operation contents realized with simple operations such as tracing with a finger or the like.

In so doing, it is possible to provide an easily understandable intuitive operability and a responsive operability to the user for the input with respect to the display screen such as a touch panel or the like.

### <2. Basic Configuration of Electronic Device Provided with Input Processing Apparatus>

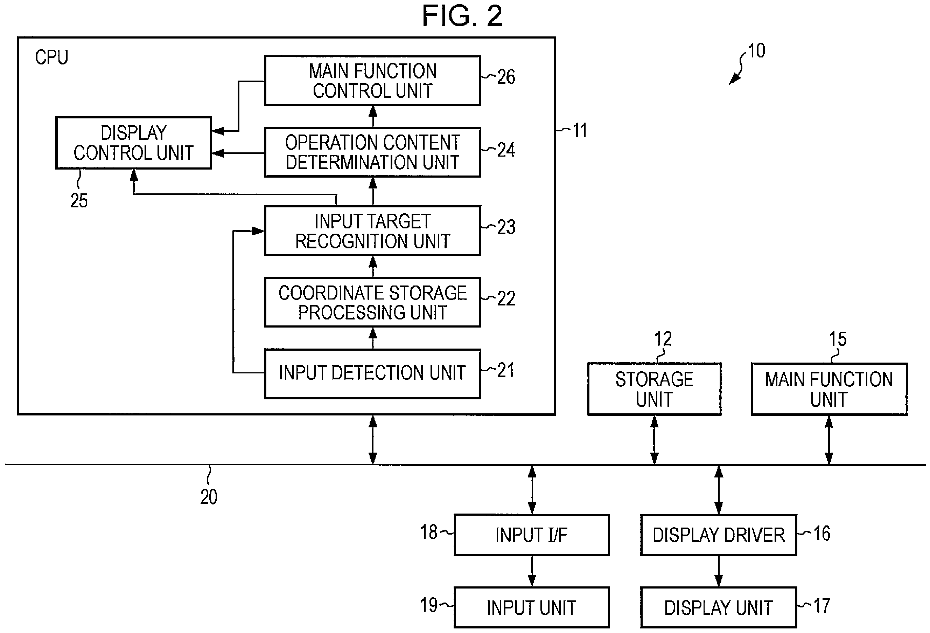

Hereinafter, more specific configurations and operations of the embodiment will be described. Fig. 2 shows a configuration example of an electronic device 10 on which the input processing apparatus 1 of the embodiment is mounted. Here, the electronic device 10 is a device on which a touch panel input is performed. Specifically, it is possible to assume a reproduction apparatus or a recording apparatus for audio data or a video data, a broadcasting receiver such as a television apparatus, an information processing apparatus such as a personal computer, a PDA (Personal Digital Assistant), or the like, a mobile phone, a communication device such as a network terminal or the like, a home electrical appliance, and the like as the electronic device 10.

As shown in Fig. 2, the electronic device 10 is provided with a CPU 11, a storage unit 12, an input interface (I/F) 18, a display driver 16, and a main function unit 15. Moreover, the electronic device 10 is provided with an input unit 19 and a display unit 17 as an integral or separated configuration.

Such components are connected to each other by a host bus constituted by an internal bus such as a CPU bus or the like and a system bus 20 constituted by an external bus such as a PCI (Peripheral Component Interconnect/Interface) or the like.

The CPU 11 functions as a computation processing apparatus and a control apparatus to control the overall or partial operations in the electronic device 10 based on the various programs stored in the storage unit 12 and the like.

The storage unit 12 collectively includes various storage sections. As the storage unit 12, a RAM (Random Access Memory), a ROM (Read Only Memory), a non-volatile memory (EEPROM (Electronically Erasable and Programmable Read Only Memory) are provided, for example. In addition, an HDD (Hard Disk Drive), a memory card, and the like may also be provided.

For example, the ROM and the EEPROM store the program, the computation parameters, and the like to be used by the CPU 11. The programs (application program and the like) may be stored on the HDD or the like.

The RAM performs primary storage of the programs to be used in the execution by the CPU 11 and parameters and the like which are arbitrarily changed in the execution.

The display driver 16 and the display unit 17 correspond to the display unit 6 shown in Fig. 1. That is, the display driver 16 drives the display unit 17 based on the display control or the supply of the display data by the CPU 11 and displays the designated content. The display unit 17 is made to display various objects in relation to the touch panel input.

The input unit 19 and the input interface 18 correspond to the input unit 5 shown in Fig. 1. That is, the input unit 19 detects the touch operation by the user with respect to the screen of the display unit 17 while the input interface 18 notifies the CPU 11 of the information of the touch operation.

The main function unit 15 collectively includes the parts which execute the main functions of the electronic device 10. For example, if the electronic device 10 is a recording apparatus or a reproduction apparatus, the main function unit 15 is a recording circuit system or a reproducing circuit system. If the electronic device 10 is a television apparatus, the main function unit 15 is a receiving system circuit for the broadcast signals. If the electronic device 10 is a mobile phone, the main function unit 15 is a communication system circuit. If the electronic device 10 is an information processing apparatus such as a personal computer or the like, a configuration can also be assumed in which the CPU 11 executes the functions of the main function unit 15.

According to such an electronic device 10, the input processing apparatus 1 of the embodiment is realized by a functional configuration (including the operations using the storage area of the storage unit 12) within the CPU 11.

In the CPU 11, the functional configuration for realizing the input processing apparatus 1 shown in Fig. 1 is formed by software, for example. In Fig. 2, an input detecting unit 21, a coordinate storage processing unit 22, an input target recognition unit 23, an operation content determination unit 24, a display control unit 25, and a main function control unit 26 are shown as the functional configuration.

The input detecting unit 21 corresponds to the input detecting unit 2 in Fig. 1, detects the touch position of the user from the detection information of the input unit 19 and performs processing of converting the touch position into the set of coordinate values of the X-Y coordinate plane corresponding to the screen plane of the display unit 17.

The coordinate storage processing unit 22 performs processing of realizing the coordinate storage unit 3 in Fig. 1. That is, the coordinate storage processing unit 22 performs processing of storing the set of coordinate values supplied from the input detecting unit 21 in a predetermined storage area (RAM, for example) in the storage unit 12. In addition, the coordinate storage processing unit 22 may be configured to store the set of coordinate values with the use of the internal register or the like of the CPU 11.

The input target recognition unit 23 corresponds to the input target recognition unit 4 in Fig. 1 and recognizes the position or the area as a target of the touch operation by the user by the calculation processing using the set of coordinate values stored in the storage unit 12 or the like in the processing by the coordinate storage processing unit 22. As shown in Fig. 1, such recognition processing is successively performed even during the sequential touch operations by the user.

The display control unit 25 corresponds to the display control unit 7 in Fig. 1 and controls the display operation by the display unit 17. The operation content determination unit 24 corresponds to the operation content determination unit 8 in Fig. 1, determines the operation content relating to the corresponding object based on the coordinates or the area (the input target position or the input target area) in the notification from the input target recognition unit 23, and performs processing (notification of the change in the display or the operation content to the application) in response to the operation content.

The main function control unit 26 is a part which performs various kinds of control for the execution of the main functions of the electronic device 10, executes a control program for the recording operation of the main function unit 15 when the electronic device 10 is a storage apparatus, and executes a control program for the receiving processing operation by the main function unit 15 when the electronic device 10 is a television apparatus. When the electronic device 10 is an information processing apparatus, the main function control unit 24 becomes a processing function unit based on various application programs.

The main function control unit 24 executes necessary processing in accordance with the user operation content determined by the operation content determination unit 24 and realizes the operation that the user desires.

Since it is assumed that the input processing apparatus of the embodiment is mounted on various devices as described above, it is a matter of course that configurations not shown in the drawing may also be mounted in accordance with the specific type of the device although the electronic device 10 is shown in Fig. 2.

For example, when the electronic device 10 is an information processing apparatus, a communication apparatus, or the like, various external interfaces, a network communication unit, a disk drive, a card drive, and the like are also provided.

In addition, each component in Fig, 2 may be configured using general members or may be configured by hardware specified for the function of each component. Accordingly, it is possible to arbitrarily change the hardware configuration to be used, in accordance with the technical level at the time point at which the embodiment is executed.

### <3. Input Processing According to First Embodiment>

### [3-1: Processing Procedure]

The first embodiment as input processing by the CPU 11 provided with a function as the input processing apparatus 1 in the electronic device 10 shown in Fig. 2, for example will be described.

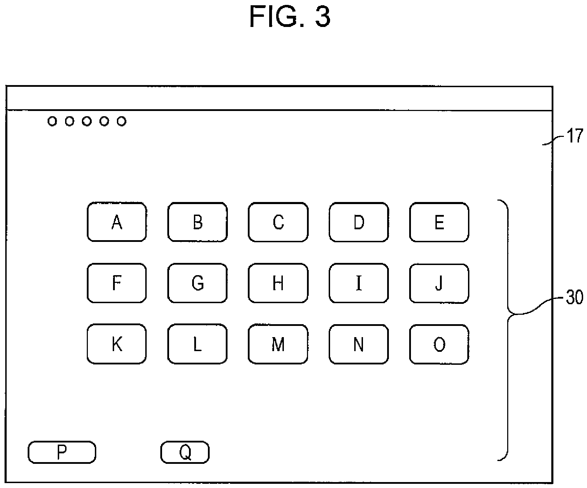

First, Fig. 3 shows a display example of objects on the screen of the display unit 17. Fig. 3 shows an example in which multiple objects 30 are respectively arranged and displayed at predetermined positions on the screen. The characters from "A" to "Q" are added to the objects, respectively, and the characters "A" to "Q" are used as an "object A", an "object B", ...and an "object Q", for example when the objects are individually indicated in the following description.

These objects 30 are displayed as characters, figures, or the like of the icons, the menu items, or the like of the operation contents in accordance with the application program or the function of the device.

According to the first embodiment, an operation by which the user brings a certain object to be in the selected state is realized by a sequential touch operation (a touch operation so as to trace the surface of the screen by a finger) performed by the user on the display screen.

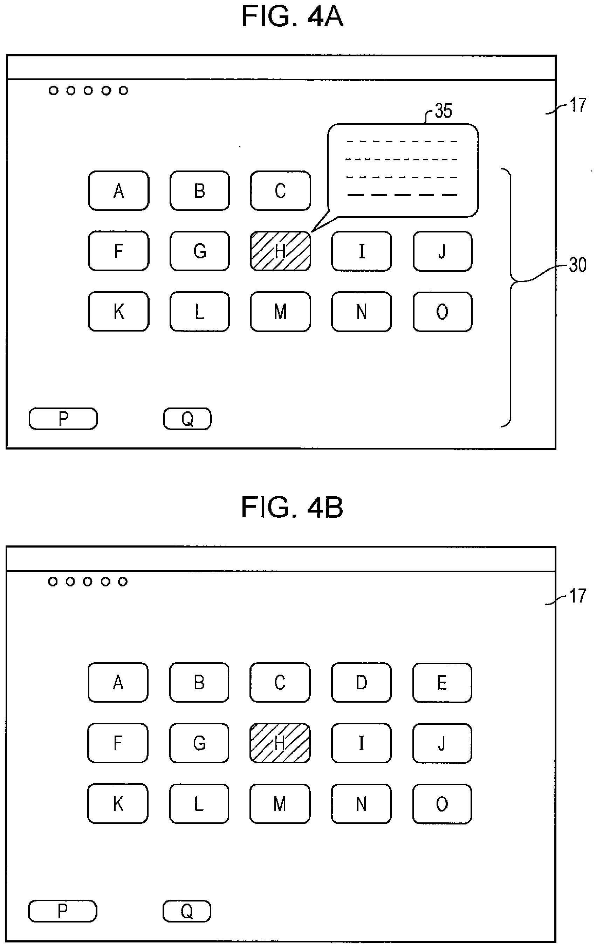

Figs. 4A and 4B show a display example when an object H is brought to be in the selected state by the touch operation by the user. Fig. 4A shows an example in which the selected object H is highlighted and displayed (shown as a hatched part in the drawing) and the function explanation 35 of the object H is displayed. For example, the user can determine whether or not the selected object is the target object by reading the content of the function explanation 35. Then, it is possible to cause the function corresponding to the object H to appear by performing the finalization (entering) operation (for example, pressing the object H, touching the object as an execution button, or the like) after that.

Fig. 4B shows an example in which the selected object H is simply highlighted and displayed. The user can cause the function corresponding to the object H to appear by performing the finalization operation after bringing the object H to be in the selected state as described above.

Hereinafter, description will be given of the user operation state for bringing a certain object to be in the selected state and the input processing for the operation of the CPU 11 as in Figs. 4A and 4B.

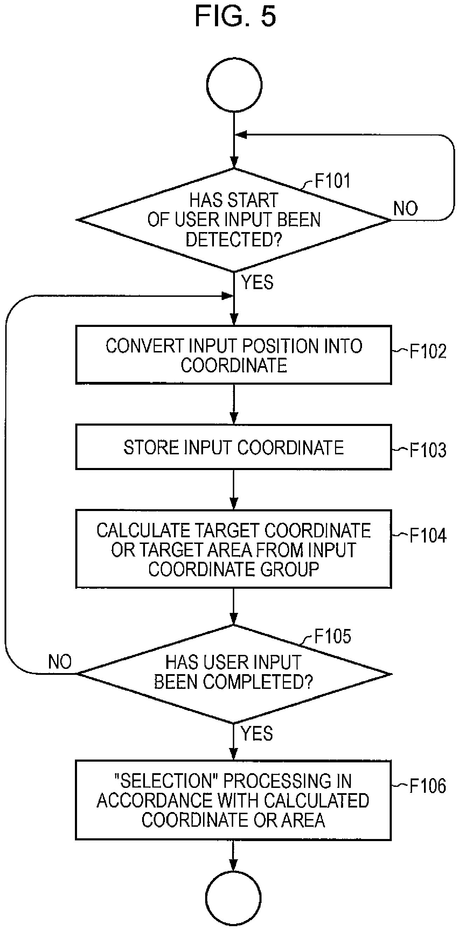

Fig. 5 is a flowchart of input processing of the CPU 11. According to the first embodiment, the processing in Fig. 5 is executed by the functions of the input detecting unit 21, the coordinate storage processing unit 22, the input target recognition unit 23, and the operation content determination unit 24 of the CPU 11.

When the CPU 11 (input detecting unit 21) detects the start of the touch input by the user in Step F101 in Fig. 5, the processing proceeds to Step F102.

In Step F102, the CPU 11 (input detecting unit 21) converts the touch detection information supplied from the input unit 19 via the input interface 18 into a set of coordinate values as input position information.

Then, the CPU 11 (coordinate storage processing unit 22) stores the set of coordinate values.

Moreover, the CPU 11 (input target recognition unit 23) calculates an input target position (hereinafter, also referred to as "input target coordinates") or an input target area from the set of coordinate values stored in the processing of Step F103 from the start of the user input to the present.

In Step F105, the CPU 11 determines whether or not the user input has been completed. If the user input has not been completed, the processing from Step F102 to Step F104 is performed again.

The completion of the user input means the time point at which the touch operation by the user is completed, namely the time point at which the finger of the user is separated from the screen of the display unit 17 or the like.

For example, when the user touches the screen for a certain time period (for example, when the user traces the screen surface with the finger), it is not determined that the user input has been completed for the certain time period, and the processing from Step F102 to Step F104 is repeated.

As a result, the coordinates of the points on the screen in accordance with the track of the sequential touch operation by the user are stored as the sets of coordinate values.

As the calculation of the input target coordinates in the above Step F104, the CPU 11 may calculate the gravity center position from one or a plurality of sets of coordinate values stored at the time point and regard the gravity center position as the input target position.

When the input target area is calculated in Step F104, the CPU 11 may calculate the area obtained by connecting one or a plurality of sets of coordinate values stored at the time point, for example, as the input target area.

If it is determined that the user input has been completed when the finger of the user is separated, for example, the CPU 11 (operation content determination unit 24) moves on to Step F106. In such a case, the CPU 11 performs the processing of bringing a certain object to be in the selected state based on the newest calculated coordinates or area at the time point.

The newest set of calculated coordinates or area means the input target coordinates or the input target area calculated in Step F104 immediately before the completion of the user input.

For example, the CPU 11 may determine from the input target coordinates at the time point at which the user input is completed that the operation content is the operation for the selection of the object at the coordinates, and perform processing of bringing the object to be in the selected state.

Alternatively, the CPU 11 may determine from the input target area at the time point at which the user input is completed that the operation content is the operation for the selection of one or a plurality of objects in the region, and perform processing of bringing the one or the plurality of objects in the selected state.

### [3-2: Selecting Operation Example by Input Target Position Recognition]

The input state for the object selecting operation realized in the processing in Fig. 5 will be described. First, description will be made here of the selecting operation example by the recognition of the input target position.

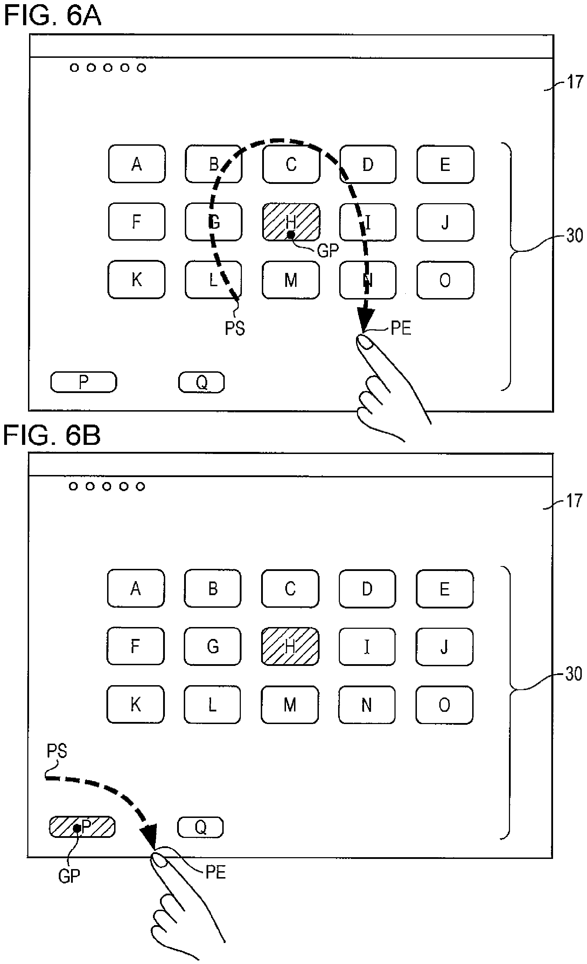

Fig. 6A shows a case in which the user performs an operation of tracing the surface of the screen along the track shown by the arrow of the broken line from the start position PS to the end position PE.

The processing in Fig, 5 is performed for the series of input operations as follows.

The processing of the CPU 11 proceeds from the Step F101 to F102 at the time point at which the finger of the user touches the start position PS, the set of coordinate values corresponding to the start position PS is calculated in Steps F103 and F104, and the input target coordinates are calculated from the set of coordinate values. At the time point, the coordinates of the start position PS are calculated as the input target coordinates.

Thereafter, the CPU 11 repeats the processing from Step F102 to Step F105 during the user operations shown by the arrow of the broken line. That is, the set of coordinate values at the contact point by the user at each time point is stored, and a gravity center position of a plurality of sets of coordinate values stored from the input start time point to the time point is obtained and regarded as the input target coordinates. Accordingly, the input target coordinates are changed in the course of the user operations.

It is assumed that the user operation proceeds to the end position PE and the finger is separated at the time point. At this time, each set of coordinate values on the track from the start position PS to the end position PE is stored, and the gravity center position of each set of coordinate values is obtained. For example, the position shown as a gravity center GP in the drawing is calculated as the input target coordinates. The CPU 11 determines in Step F105 that the input has been completed when the finger of the user is separated, and the input target coordinates calculated at the time point is regarded as the input target coordinates as the target of the series of the operations in Step F106. Then, it is determined that the selecting operation is performed on the input target coordinates, namely the object H displayed at the position of the gravity center GP, and the object H is highlighted and displayed (shown as a hatched part).

Therefore, the user may trace with the finger the circumference of the object H to be selected so as to surround the object H. At this time, it is not necessary to surround the circumference of the object H as a closed space such that an intersection point is created, and the user may roughly trace the circumference of the object H. For this reason, it is possible to reduce the burden on the user for performing an operation of precisely depicting a circle.

Since the CPU 11 constantly calculates the input target coordinates during the operation, the newest input target coordinates at the time point at which the finger of the user is separated are simply regarded as the input target coordinates as the target of the user operation, and the corresponding object may be brought into the selected state. This means that the finger of the user can arbitrarily be separated. That is, the CPU 11 can recognize the input target coordinates as the target of the operation whenever the user completes the operation by separating the finger.

In addition, the computation processing burden for the calculation of the gravity center position from a plurality of sets of coordinate values is relatively small. Accordingly, there is also an advantage in that the processing burden on the CPU 11 is reduced for the processing of this example, which is for constantly calculating the input target coordinates during the operation.

Next, description will be given of the operation input state in Fig. 6B.

Fig. 6B shows an example of a case in which an object displayed near the corner of the display screen is selected. The user traces the screen with the finger from the start position PS to the end position PE as the operation for selecting the object P. Even in such a case, the CPU 11 repeats the processing from Steps F102 to Step F105 in Fig. 5 and calculates the input target coordinates as the gravity center position. When the finger of the user is separated at the end position PE, the position of the gravity center GP at the time point is regarded as the input target coordinates of the series of the operations at this time, and the object P displayed at the gravity center GP is brought to be in the selected sate.

In the case of this embodiment, it is not necessary for the user to precisely surround the circumference of the object to be selected. Therefore, it does not become difficult to perform the selecting operation of the object which is present at a position where it is difficult to trace the circumference thereof.

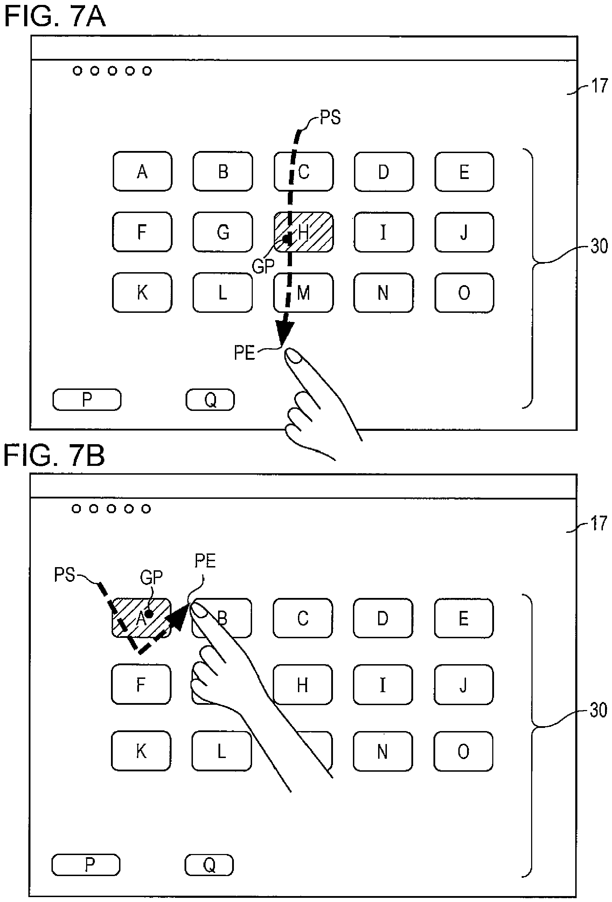

In still another example, it is possible to select an object with touch operations as shown in Figs. 7A and 7B since it is not necessary to surround the circumference of the target object in the embodiment.

Fig. 7A shows a case in which the user traces the screen from the start position PS to the end position PE in a substantially linear manner. Although the same processing in Fig. 5 is performed even in this case, the position of the gravity center GP at the time point at which the operation is completed (time point at which the finger reaches the end position PE and is separated) is on the object H as shown in the drawing. In such a case, the CPU 11 may determine that the selecting operation has been performed on the object H.

Fig. 7B shows a case in which the user performs an input operation near the object A such that the track from the start position PS to the end position PE has a V shape. Since the position of the gravity center GP at the operation completion time point is on the object A as shown in the drawing, the CPU 11 may determine that the selection operation has been performed on the object A.

In this embodiment, it is possible to perform the object selection corresponding to the various tracks of the touch inputs by the user as described above. The user can perform the selecting operation with the recognition that the user may simply trace the circumference or the vicinity of the target object without intensively paying attention thereto, and it is possible to realize an intuitively understandable simple operation for the user.

### [3-3: Selecting Operation Example by Input Target Area Recognition]

Next, description will be given of a selecting operation example by the recognition of the input target area, as the input state for the object selecting operation which is similarly realized by the processing in Fig. 5.

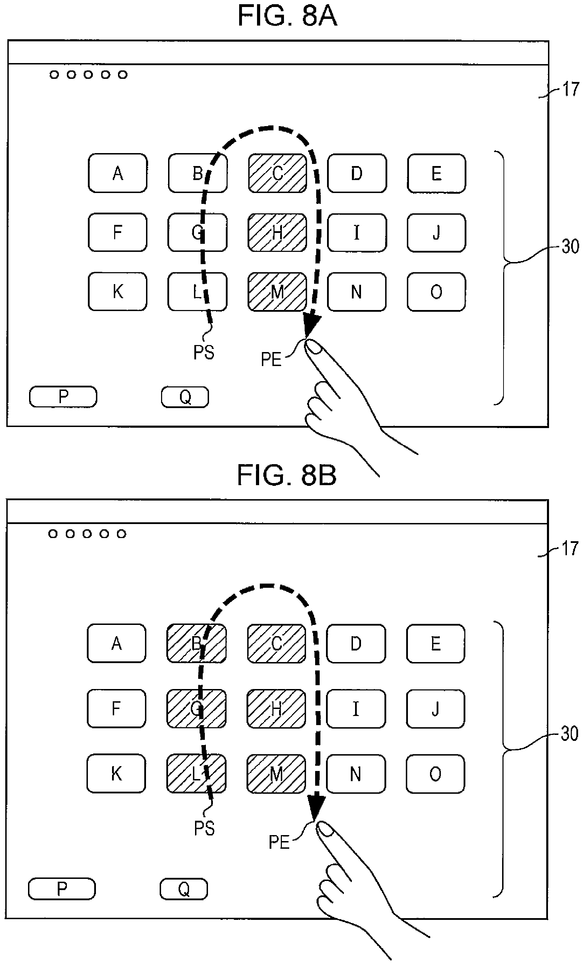

Fig. 8A shows a case in which the user performs an operation of tracing the screen from the start position PS to the end position PE along the track shown by the arrow of the broken line.

The processing in Fig. 5 is performed for the series of input operations as follows.

First, the processing of the CPU 11 proceeds from Step F101 to Step F102 at the time point when the finger of the user contacts with the start position PS, the set of coordinate values corresponding to the start position PS is stored in Steps F103 and F104, and the input target area is calculated from the set of coordinate values.

As described above, an area obtained by connecting each stored set of coordinate values is regarded as the input target area. That is, the input target region may become an area with a polygonal shape surrounded by the line segments connected between sets of coordinate values.

Since only one set of coordinate values is stored at the start position PS, the firstly calculated input target area is not an "area" but a point in practice. At the time point at which the second set of coordinate values is obtained, the line segment connecting two sets of coordinate values is the input target area. At the time point at which the third set of coordinate values is obtained, the input target area with a triangle shape is calculated. Thereafter, the input target area with a polygonal shape is calculated as the number of the stored set of coordinate values is increased, which is a typical calculation state of the input target area.

Such processing is repeated as Steps F102 to F104 in Fig. 5 during the operation input. Accordingly, the input target area is changed as the operation by the user proceeds.

It is assumed that the user operation proceeds up to the end position PE and the finger is separated at the time point. At this time, each set of coordinate values on the track from the start position PS to the end position PE is stored, and the input target area with a polygonal shape obtained by connecting each set of coordinate values is obtained. The area surrounded by the arrow of a wavy line in Fig. 8A can be considered as the input target area at that time.

The CPU 11 determines in Step F105 that the input has been completed when the finger of the user is separated and regards the input target area calculated at that time as the input target area as the target of the series of the operation in Step F106. Then, determination is made such that the selecting operation has been performed on one or a plurality of objects H included in the input target area, and the corresponding objects are highlighted and displayed.

Here, two ideas can be employed when objects are included in the input target area. Fig. 8A shows objects, which are entirely included within the input target area, as the "included" objects.

That is, the objects C, H, and M are completely included within the input target area as a range which is substantially surrounded by the arrow of the wavy line in Fig. 8A. Thus, the CPU 11 determines that the selecting operation has been performed on the objects C, H, and M and highlights and displays the objects C, H, and M (shows them as hatched parts).

On the other hand, it is also possible to regard an object, which is at least partially included in the input target area, as the "included" object.

Fig. 8B shows a case of a similar operation track, and the objects B, G, L, C, H, and M are at least partially present in the input target area, respectively. Thus, the CPU 11 determines that the selecting operation has been performed on the objects B, G, L, C, H, and M and highlights and displays the objects B, G, L, C, H, and M.

Selection may be made regarding which of the objects completely included in the input target area and the objects at least partially included in the input target area is to be regarded as the corresponding objects, in consideration with the type of the device, the content of each object, the display layout, and the like. In addition, a configuration is also applicable in which the setting can be selectively made by the user as the input setting.

Accordingly, when the user intends to select one or a plurality of objects as described above, the user may trace the display with the finger so as to surround the circumference of the target object group. At this time, it is not necessary to surround the circumference of the object group as a closed space so as to create an intersection, and the user may roughly trace the circumference of the object group. Therefore, it is possible to reduce the burden on the user for performing an operation of precisely depicting a circle.

Since the CPU 11 constantly calculates the input target coordinates during the operation, the corresponding object may be selected from the newest input target area at the time point at which the finger of the user is separated, and brought to be in the selected state. That is, the CPU 11 can recognize the input target area in response to the completion of the operation whenever the finger of the user is separated.

One or a plurality of objects can easily be selected as described above, which is effective when the objects are objects indicating files or folders used in a personal computer, a digital still camera, or the like.

For example, a case is considered in which multiple thumbnail images for image data are displayed as the objects 30 in the display unit 17. Here, a simple input interface can be realized in which the user may trace the circumference of a group of image data items when the user desires to bring the group of image data items to be in the selected state.

Although the description has been given of a case that the input target area is generally an area with a polygonal shape obtained by connecting multiple sets of coordinate values as described above, it is possible to assume areas with various shapes since the operation is arbitrarily made by the user.

For example, when the user traces the screen with the finger so as to be in a completely linear shape with respect to the resolution of the input unit 19, the input target area is recognized as a straight line even at the time point of the completion of the operation. When an object partially included in the input target area is regarded as the "included" object as shown in Fig. 8B, it is possible to determine that an appropriate selecting operation has been performed even when the input target area in the linear shape is calculated. For example, when the user traces the objects A, F, and K with the finger in the straight manner on the screen shown in Figs. 8A, 8B and the like, and the input target area with a linear shape is thus calculated by the CPU 11, the CPU 11 may perform processing of bringing the objects A, F, and K to be in the selected state.

Moreover, when the user traces the screen in an 8 shape, the CPU 11 may recognize two adjacent input target areas and determine that the operation is the selecting operation of the objects included in the two areas.

Various operation tracks by the input of the user can be considered, and it is possible to handle various operation tracks as long as the operation tracks are the ones from which points, line segments, and areas can be understood.

A configuration is also applicable in which it is determined that two areas are designated as the input target areas when a sequential input operation is performed at another position even after a sequential operation is completed.

For example, it is assumed that the same selecting operation is performed on the objects E, J, and O without any other operations such as a finalization operation in the state in which the objects C, H, and M are selected as shown in Fig. 8A. This is an example in which the determination is made such that the objects C, H, M, E, J, and O are selected in such a case.

### [3-4: Conclusion of First Embodiment]

According to the first embodiment, the input target position or the input target area is successively calculated from each stored set of coordinate values during the input from the start to the end of the sequential input operation with respect to the display screen as described above. Then, the input target position or the input target area calculated at the time point of the completion of the input operation is recognized as the input target position or the input target area by the sequential input operation. The corresponding object is selected from the input target position or the input target area, and processing is performed on the assumption that the object is "selected".

In so doing, the user can select an object with an intuitive easy (with no burden) operation, and it is also possible to shorten the time for the selecting operation since there is no burden on the user for creating a closed space or the like. In addition, it is also possible to smoothly perform the finalization operation thereafter and thereby to realize a rhythmical sense of operation.

Generally, the "selecting" operation is not performed particularly in the touch panel scheme. For example, the touching (tapping) of the object on the screen is the operation corresponding to the "finalization in the touch panel scheme in many cases.

On the other hand, when the "selecting" operation is provided, the first touch corresponds to the "selecting" and the subsequent second touch corresponds to the "finalization". This is not easily understood by the user in many cases.

According to this embodiment, the "finalization" is performed by "selecting" an object with a tracing operation by a finger and then touching the object in the selected state or an object as a finalization key. The "selecting" operation and the "finalization" operation are clearly different according to this embodiment, and therefore, it is possible to provide an easily understandable operability for the user.

According to this embodiment, it is possible to select an object at the end of the screen as described above with reference to Fig. 6B, for example, since it is not necessary for the user to create an intersection point unlike in Japanese Unexamined Patent Application Publication No. 2009-110135.

When the apparatus such as a television apparatus, a video device, or the like which is designed on the assumption of a remote controller is shifted or made to support an apparatus provided with a touch panel, smooth shifting can be made while both the cursor UI and the touch UI (touch panel scheme) are used.

It is possible to shift an object as a selection target with up, down, left, and right buttons of the remote controller while it is also possible to cause the object as the selection target to execute a predetermined operation with the finalization button of the remote controller. In addition, it is possible to update the display of the detailed information of the selection target on the screen when the selection target is shifted.

Generally, the "selecting" operation, which is performed in the cursor UI, is not performed in the touch UI as described above. When the user taps a target on the screen with the finger while viewing the displayed screen, the selection and the finalization of the tapped object are simultaneously performed, and a predetermined operation is executed. In this touch UI, the shifting of the selection target and the information display of the selection target, which can be performed in the cursor UI, are not available. According to this embodiment, however, the "selecting" operation is included in the touch UI, and it is possible to provide an instinctive and rhythmical operability for the user. With such a configuration, it is also possible to apply the updating of the display of the detailed information regarding the selection target on the screen, namely the display of the function explanation 35 shown in Fig. 4A, as they are.

### <4. Input Processing According to Second Embodiment>

### [4-1: Processing Procedure]

The second embodiment as the input processing by the CPU 11 will be described. According to the second embodiment, the input target coordinates or the input target area is recognized in response to a sequential touch operation by the user, and a corresponding object is brought to be in the selected state in response to the recognition, basically in the same manner as in the first embodiment. The second embodiment is configured such that the CPU 11 (display control unit 25) executes the display in response to the input operation on the screen of the display unit 17 during the operation input by the user and whereby the operability of the user is significantly enhanced.

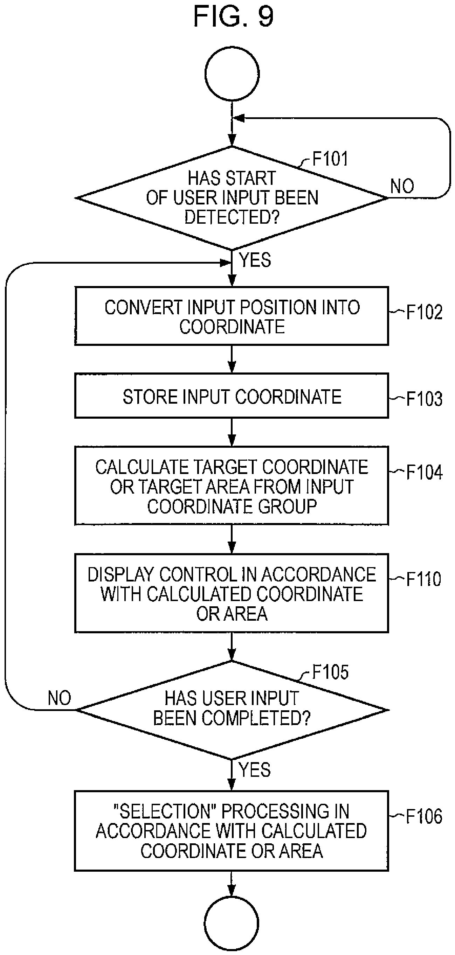

Fig. 9 is a flowchart of the input processing by the CPU 11. The same step number is added to the same processing as that in the aforementioned Fig. 5, and the description thereof will be omitted. According to the second embodiment, the processing in Fig. 9 is executed not only by the functions of the input detecting unit 21, the coordinate storage processing unit 22, the input target recognition unit 23, and the operation content determination unit 24 of the CPU 11 but also by the function display control unit 25.

The second embodiment is different from the first embodiment in that the CPU 11 (display control unit 25) performs display control in response to the input operation in Step F110. Specifically, the CPU 11 performs the display control in accordance with the calculated input target coordinates or the input target area.

Since the Steps F102, F103, F104, and F110 are repeated until it is determined that the input has been completed in Step F105, the feedback display is immediately performed on the screen for the user during the input operation.

Thereafter, if it is determined that the user input has been completed when the finger of the user is separated, for example, the CPU 11 performs the processing of bringing a certain object to be in the selected state based on the newest calculated coordinates or area at the time point in Step F106. In such a case, the object as a selection target is clearly shown to the user even on the display screen by the aforementioned feedback display. In other words, since the user can clearly know the selection target from the change in display while tracing the screen with the finger, the user may complete the operation after confirming that the desired selected state has been obtained.

### [4-2: Display Example of Input Target Position During Operations]

A display example of the input target position (input target coordinates) during the operation, which is realized in the above processing in Fig. 9, will be described.

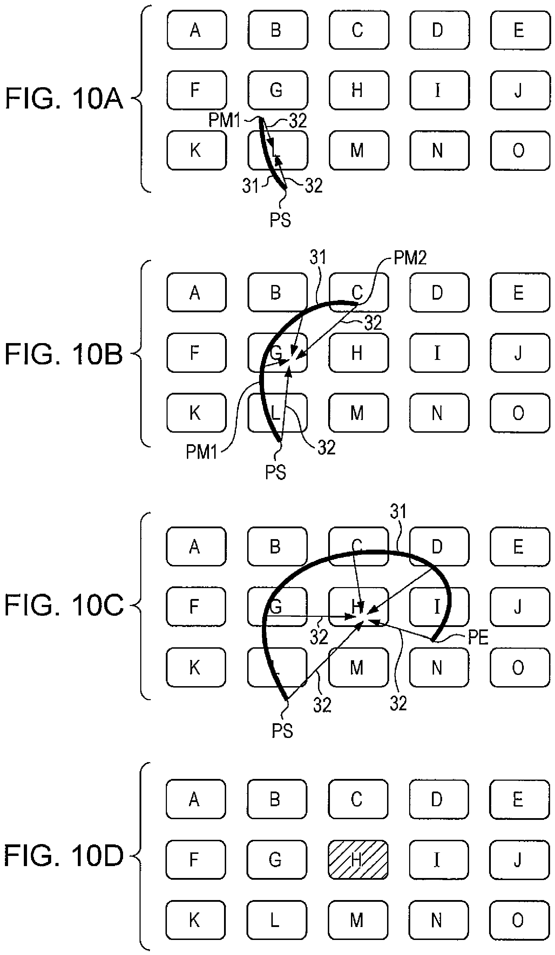

First, a description will be given of an example in which the operation track and the gravity center position are successively displayed during the operation by the user, with reference to Figs. 10A to 10B.

Fig. 10A shows a state in which the operation input by the user proceeds from the start position PS to a position PM1.

The processing of Steps F102 to F110 in Fig. 9 is repeated multiple times up to the position PM1, and as a result, the display of the operation track 31 is performed on the screen as shown in the drawing. The operation track 31 is displayed as a line connecting each set of coordinate values stored at the time point.

Moreover, the gravity center position at the time point (at the time point at which the user input proceeds to the position PM1) is shown with a plurality of arrows 32. The gravity center position is obtained from each set of coordinate values stored at the time point.

Since the gravity center position is successively changed while the user operation proceeds, the images of the arrows 32 are changed until the user input reaches the position PM1.

Fig. 10B shows a state in which the user operation further proceeds up to the position PM2. At this time point, the operation track 31 up to the position PM2 and the gravity center position at the time point are shown by the arrows 32.

Fig. 10C shows a state immediately before the finger of the user is separated after the operation proceeds up to the end position PE. At this time point, the operation track 31 reaching the end position PE and the gravity center position at the time point are shown by the arrows 32.

When the finger of the user is separated to complete the operation, the CPU 11 regards the coordinates of the gravity center position at the time point as the input target coordinates and brings the corresponding object to be in the selected state. In this case, the object H is present at the gravity center position. Therefore, the object H is highlighted and displayed as a selected state as shown in Fig. 10D.

Accordingly, the user operation may proceed while the user confirms the operation track 31 and the gravity center position shown by the arrows 32, and the finger of the user may be separated when the gravity center position is superimposed on the object to be selected.

Another example can also be considered in which only the operation track 31 is displayed and the gravity center position is not shown by the arrows 32.

Alternatively, another example can also be considered in which the operation track 31 is not displayed while the gravity center position is shown by the arrows 32.

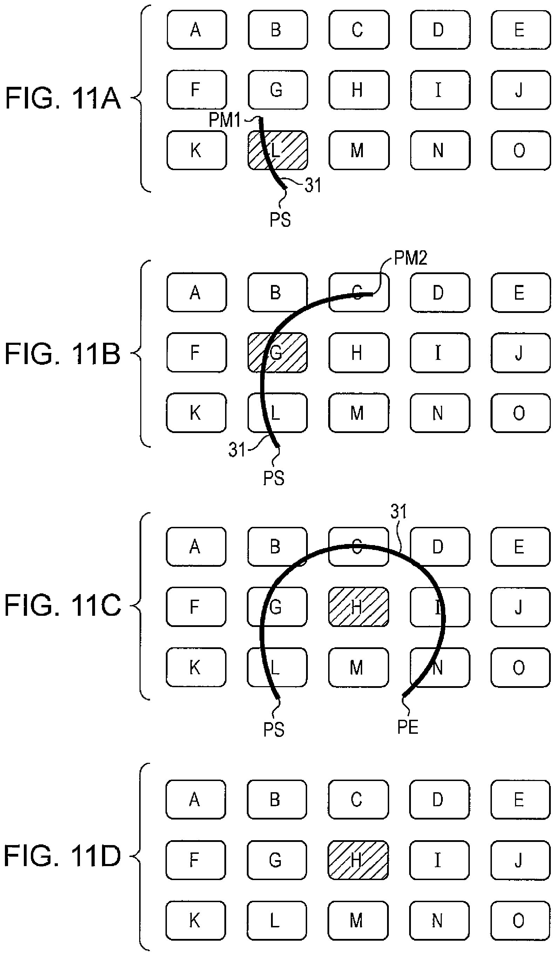

Next, description will be given of a case in which not the gravity center position itself but an object which can be brought to be in the selected state during the operation is shown, with reference to Figs. 11A to 11D.

Fig. 11A shows a state in which the operation input by the user proceeds from the start position PS to the position PM1.

By the processing from Steps F102 to Step F110 in Fig. 9 up to the position PM1, the operation track 31 is displayed on the screen as shown in the drawing. Moreover, the object which can be brought to be in the selected state is shown to the user by being highlighted and displayed, for example, based on the gravity center position calculated at the time point (at the time point when the user operation proceeds up to the position PM1).

That is, since the gravity center position is located on the object L at the time point at which the operation proceeds up to the position PM1 as shown in Fig, 11A, the object L is emphasized and shown as compared with the other objects in response thereto. In so doing, the user is notified of the fact that "the object L is to be selected if the user completes the operation now".

Fig. 11B shows a state in which the user operation further proceeds up to the position PM2 thereafter. At this time point, the operation track 31 up to the position PM2 and the object which can be selected based on the gravity center position at the time point are shown. In this case, since the gravity center position is moved onto the object G, the object G is highlighted and displayed.

Fig. 11C shows a state immediately before the user operation proceeds up to the end position PE and the finger is separated. At this time point, the operation track 31 up to the end position PE and the object (the object H in this example) in accordance with the gravity center position at the time point are shown.

Then, when the finger of the user is separated to complete the operation, the CPU 11 regards the coordinates of the gravity center position at the time point as the input target coordinates and brings the corresponding object to be in the selected state. In this case, the object H is brought to be in the selected state, and the object H is highlighted and displayed as shown in Fig. 11D.

Accordingly, the user may perform the operation while confirming the operation track 31 and the object which can be brought to be in the selected state at each time point during the operation, and the finger may be separated when the object to be selected is highlighted and displayed.

The display showing the gravity center position by the arrows 32 may also be performed in addition to showing the object which can be selected during the operation as described above as in Figs. 10A to 10D.

In addition, another example can also be considered in which the operation track 31 is not displayed while the object which can be selected during the operation is shown.

In addition, another configuration is also applicable in which the function explanation 35 of the object is displayed as shown in Fig. 4A as well as the simple highlighting and displaying of the object when the object to be selected is shown during the operation. In so doing, it becomes possible for the user to continue the input operation while searching for the target object.

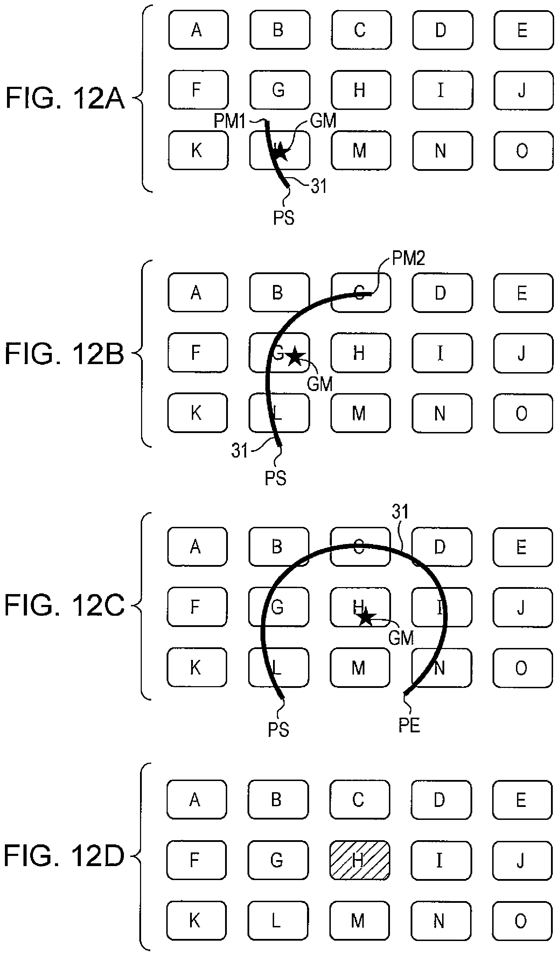

Figs. 12A to 12D show another example in which the operation track and the gravity center position are successively displayed during the user operation in the same manner as in Figs. 10A to 10D. Here, the gravity center position is shown not with the arrows 32 but with a gravity center mark GM with a predetermined shape (a star shape in the drawing).

Fig. 12A shows a state in which the operation input by the user proceeds from the start position PS to the position PM1. At this time point, the operation track 31 is displayed, and the gravity center position is further shown by the gravity center mark GM.

Fig. 12B shows a state in which the user operation further proceeds up to the position PM2 thereafter. Even at this time point, the operation track 31 up to the position PM2 and the gravity center position at the time point are shown by the gravity center mark GM.

Fig. 12C shows a state immediately before the user operation proceeds up to the end position PE and the finger is separated. At this time point, the operation track 31 up to the end position PE and the gravity center position at the time point are shown by the gravity center mark GM.

Then, when the finger of the user is separated to complete the operation, the CPU 11 regards the coordinates of the gravity center position at the time point as the input target coordinates and brings the object to be in the selected state. In this case, the display is performed such that the object H is highlighted and displayed as the selected state as shown in Fig. 11D.

Accordingly, the user performs the operation while confirming the operation track 31 and the gravity center position by the gravity center mark GM, and the finger may be separated when the gravity center position is superimposed on the selected object. Since the gravity center mark GM is moved as the operation progresses, it is possible to perform the operation with a sense of placing the gravity center mark GM on the target object.

In addition, another example can also be considered in which the operation track 31 is not displayed and only the gravity center position is shown by the gravity center mark GM.

Alternatively, another configuration can also be considered in which the gravity center position is shown by both the arrows 32 in Figs. 10A to 10D and the gravity center mark GM.

Moreover, another configuration is also applicable in which the object corresponding to the gravity center position is highlighted and displayed during the operation in combination with the example in Figs. 11A to 11D.

### [4-3: Display Example of Input Target Area During Operations]

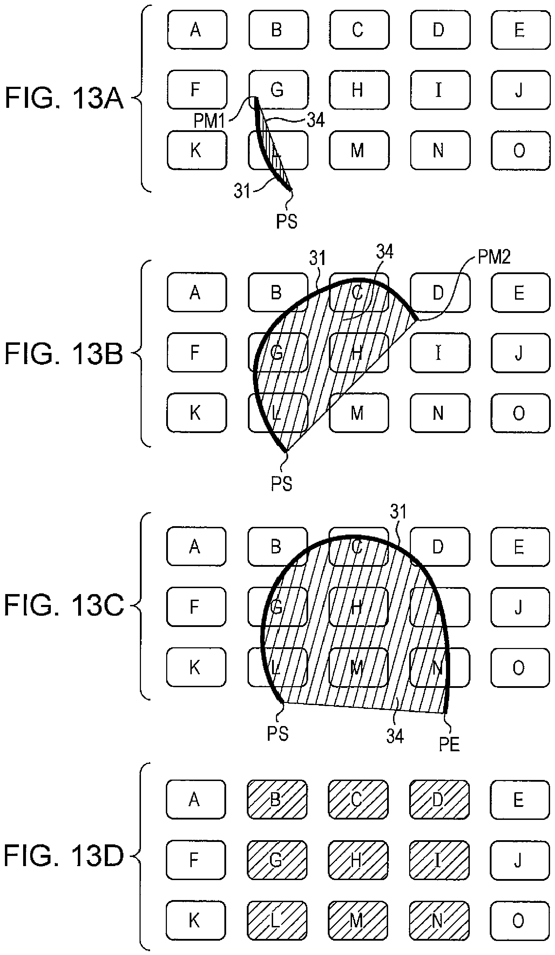

Next, description will be given of a display example of the input target area during the operation, which is realized by the above processing in Fig. 9. Figs. 13A to 13D show an example in which the operation track and the input target area are displayed during the user operation.

Fig. 13A shows a state in which the operation input by the user proceeds from the start position PS to the position PM1.

The processing from Step F102 to Step F110 in Fig. 9 is repeated multiple times up to the position PM1, and as a result, the operation track 31 is displayed on the screen as shown in the drawing, and the input target area image 34 at the time point (at the time point at which the user input proceeds up to the position PM1) is further shown as shown by the hatched part in the drawing. As described above in the first embodiment, the input target area is an area obtained by connecting each set of coordinate values stored at the time point, for example. The input target area image 34 on the display shows the thus calculated area.

In addition, various display states such as highlighting the input target area display 34 as compared with the other parts, displaying the input target area display 34 with a different color, and the like can be considered in practice.

Fig. 13B shows a state in which the user operation further proceeds up to the position PM2 thereafter. At this time point, the operation track 31 up to the position PM2 and the input target area image 34 at the time point are shown. Fig. 13C shows a state immediately before the user operation proceeds up to the end position PE and the finger is separated. Even at this time point, the operation track 31 up to the end position PE and the input target area image 34 are shown.

When the finger of the user is separated to complete the operation, the CPU 11 brings the object corresponding to the input target area at the time point to be in the selected state. For example, when the objects, B, G, L, C, H, M, D, I, and N correspond to the input target area, the display is performed such that the objects B, G, L, C, H, M, D, I, and N are highlighted and displayed as the selected state as shown in Fig. 13D.

Accordingly, the user may perform the operation while confirming the operation track 31 and the input target area image 34, and the finger may be separated when one or a plurality of objects to be selected are in the input target area image 34.

Incidentally, when the object which is entirely included is regarded as a corresponding object as shown in Fig. 8A, only the objects H and M are in the selected state if the operation input is completed in the state shown in Fig. 13C.

In addition, another example can also be considered in which the operation track 31 is not displayed while the input target area image 34 is displayed. In such a case, however, the operation track is shown as a profile line of the input target area image 34.

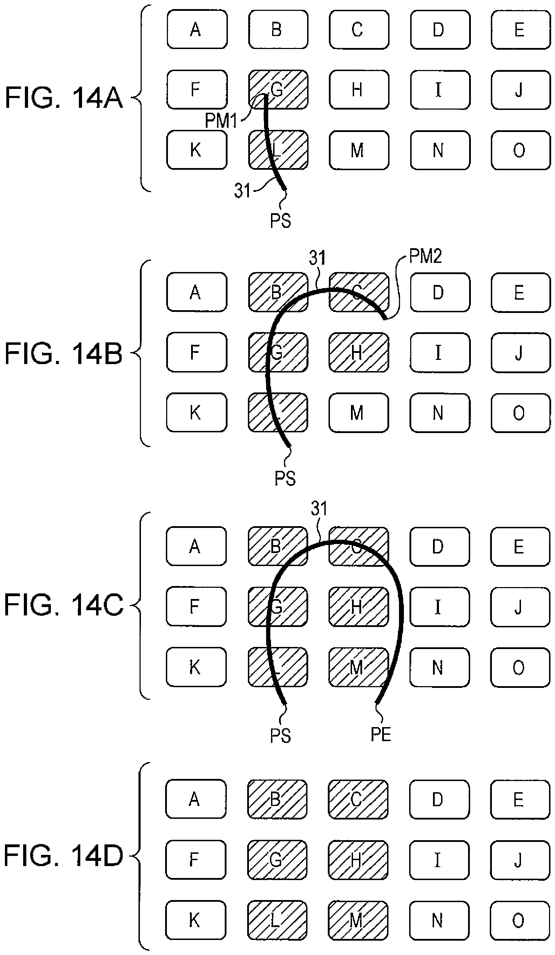

Next, description will be given of an example in which not the input target area itself but an object to be in the selected state during the operation is shown with reference to Figs. 14A to 14D.

Fig. 14A shows a state in which the operation input by the user proceeds from the start position PS to the position PM1.

By the processing from Step F102 to Step F110 in Fig. 9 up to the position PM1, the operation track 31 is displayed on the screen as shown in the drawing. Moreover, the object which can be in the selected state is shown to the user by highlighting and displaying, for example, based on the input target area calculated at the time point (at the time point at which the operation input proceeds up to the position PM1).

In the case of Fig. 14A, the objects L and G are partially included in the input target area calculated from each set of coordinate values from the start position PS to the position PM1. Thus, the objects L and G are emphasized and displayed so as to notify the user of the fact that "the objects L and G are to be selected if the user completes the operation now".

Fig. 14B shows a state in which the user operation further proceeds up to the position PM2 thereafter. At this time point, the operation track 31 up to the position PM2 and the object which can be selected based on the input target area at the time point are shown. In this case, the objects B, G, L, C, and H are included in the input target area and highlighted and displayed.

Fig. 14C shows a state immediately before the user operation proceeds up to the end position PE and the finger is separated. At this time point, the operation track 31 up to the end position PE and the object (the objects B, G, L, C, H, and M in this example) included in the input target area at the time point are shown.

When the finger of the user is separated to complete the operation, the CPU 11 brings the object included in the input target area at the time point to be in the selected state. In this case, the objects B, G, L, C, H, and M are brought to be in the selected state and highlighted and displayed as shown in Fig. 14D.

Accordingly, the user may perform the operation while confirming the operation track 31 and the object which can be in the selected state at each time point during the operation, and the finger may be separated when one or a plurality of objects to be selected are highlighted and displayed.

In addition to showing the object which can be selected during the operation as described above, the display showing the input target area may be performed by the input target area image 34 as shown in Figs. 13A to 13D.

In addition, another example can also be considered in which the operation track 31 is not displayed while the object which can be selected during the operation is shown.

Moreover, another configuration is also applicable in which the function explanation 35 of the object is displayed as shown in Fig. 4A as well as simply highlighting and displaying the object when the object to be selected is shown during the operation.

### [4-4: Conclusion of Second Embodiment]

The above description has been made of a display example during the operation according to the second embodiment.

According to the second embodiment, the CPU 11 (display control unit 25) executes the display in response to the input operation on the display screen during the input as in each example.

For example, the CPU 11 performs execution control of the display showing the operation track 31 recognized from each set of coordinate values in the sequential input operation, as the display in response to the input operation.

In addition, the CPU 11 controls the display execution of the arrows 32, the gravity center mark GM as the display showing the input target coordinates (gravity center position) recognized from each set of coordinate values in the sequential input operation, as the display in response to the input operation.

Moreover, the CPU 11 executes the display showing the object corresponding to the input target coordinates by highlighting and displaying the object, for example, as the display showing the input target position.

In addition, the CPU 11 controls the execution of the display showing the input target area, which is recognized from each set of coordinate values in the sequential input operation, by the input target area image 34 as the display in response to the input operation.

In addition, the CPU 11 executes the display showing the object included in the input target area as the display showing the input target area.

By performing the display during the input operation as described above, the user can perform the selecting operation of a desired object while moving the finger and making confirmation, and therefore, it is possible to reduce the erroneous selection and provide an easily understandable operation.

### <5. Input Processing According to Third Embodiment>

### [5-1: Processing Procedure]

The third embodiment as the input processing by the CPU 11 will be described. According to the third embodiment, the input target coordinates or the input target area is recognized in response to the sequential touch operation by the user basically in the same manner as in the first embodiment. According to the third embodiment, however, the CPU 11 (operation content determination unit 24) determines the content of the operation based on the state of the operation input by the user. Particularly, the content of the operation is determined based on the directionality determined from the operation track.

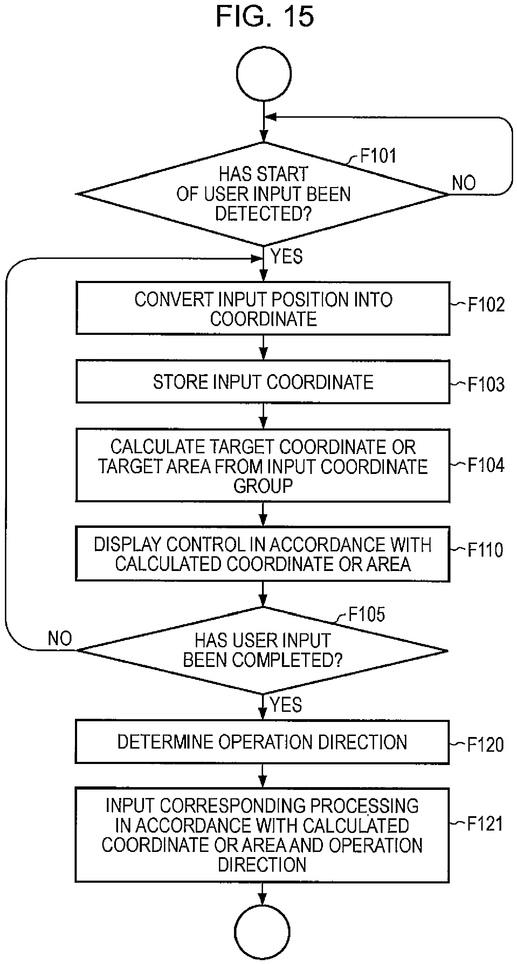

Fig. 15 is a flowchart of the input processing by the CPU 11. The same step number is added to the same processing as that in the aforementioned Figs. 5 and 9, and the description thereof will be omitted. Fig. 15 is different from Fig. 9 in Steps F120 and F121 after the user completes the operation input.

That is, the CPU 11 (input target recognition unit 23) determines the newest input target coordinates or the input target area at the time point in response to the completion of the user input and determines the content of the user operation. In this case, the CPU 11 (input target recognition unit 23) determines the directionality of the input operation from the sets of coordinate values stored by the time point in Step F120 when the user input is completed. For example, it is determined in which one of the clockwise direction or the counterclockwise direction the operation is performed.

Then, the CPU 11 (operation content determination unit 24) determines the content of the operation, which the user intends, based on the input target coordinates or the input target area and the determined directionality and performs processing corresponding to the content of the operation in Step F121.

### [5-2: Example of Acceptance in Processing in Accordance with Directionality]

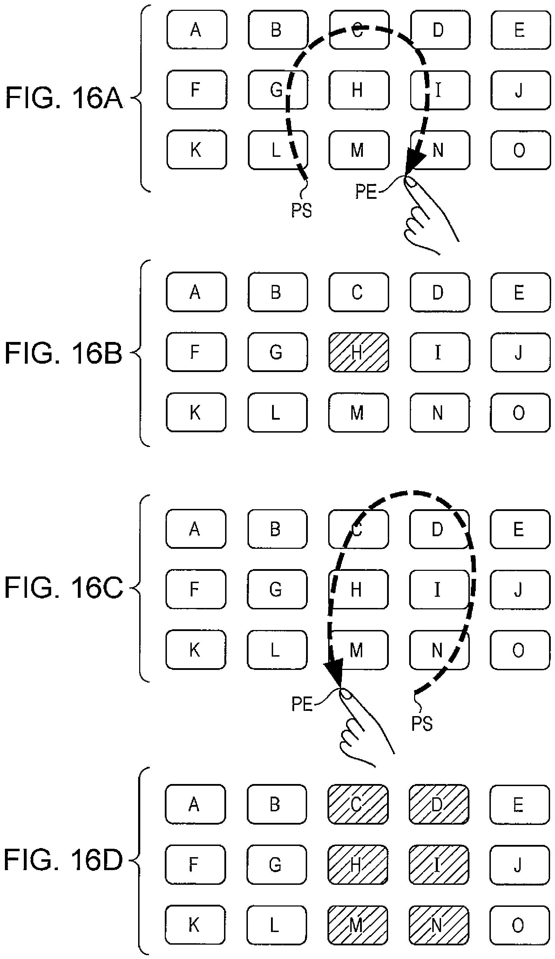

A specific example will be described. Figs. 16A to 16D show an example in which it is determined that the selecting operation by the input target coordinates (gravity center) is performed when the user performs an operation along the track in the clockwise direction while it is determined that the selecting operation by the input target area is performed when the user performs an operation along the track in the counterclockwise direction.

Fig. 16A shows a user operation of tracing the circumference of the object H along the track in the clockwise direction as shown by the arrow of the wavy line.

Since the track is in the clockwise direction in this case, the CPU 11 recognizes in Step F121 that this operation is a selecting operation with respect to the object H which is present at the gravity center position and highlights and displays the object H as shown in Fig. 16B.

On the other hand, Fig. 16C shows a case in which the user performs the input operation in the track in the counterclockwise direction as shown by the arrow by the wavy line.

Since the track is the track in the counterclockwise direction in this case, the CPU 11 recognizes in Step F121 that the user operation is a selecting operation of designating the input target area and selecting the object included in the input target area. In this case, the objects C, H, M, D, I, and O are highlighted and displayed as shown in Fig. 16D.

Since it is possible to execute the selection by the input target coordinates and the selection by the input target area based on the direction of the operation as described above, the user can perform various kinds of selection with a simple selecting operation.

Although not shown in Figs. 16A to 16D, the display during the operation is performed in practice in the processing in Step F110. In such a case, it is successively determined in which one of the clockwise direction and the counterclockwise direction the operation is performed, during the operation. At the time point when it is determined that the operation is performed in the clockwise direction, the display as shown in Figs. 10A to 12D may be performed. At the time point when it is determined that the operation is performed in the counterclockwise direction, the display shown in Figs. 13A to 14D may be performed. In so doing, it is easy for the user to understand what the current operation is for without understanding the difference in the operations in the clockwise direction and the counterclockwise direction in particular. Accordingly, it is possible to maintain the instinctive operability for the user while various operations can be performed.

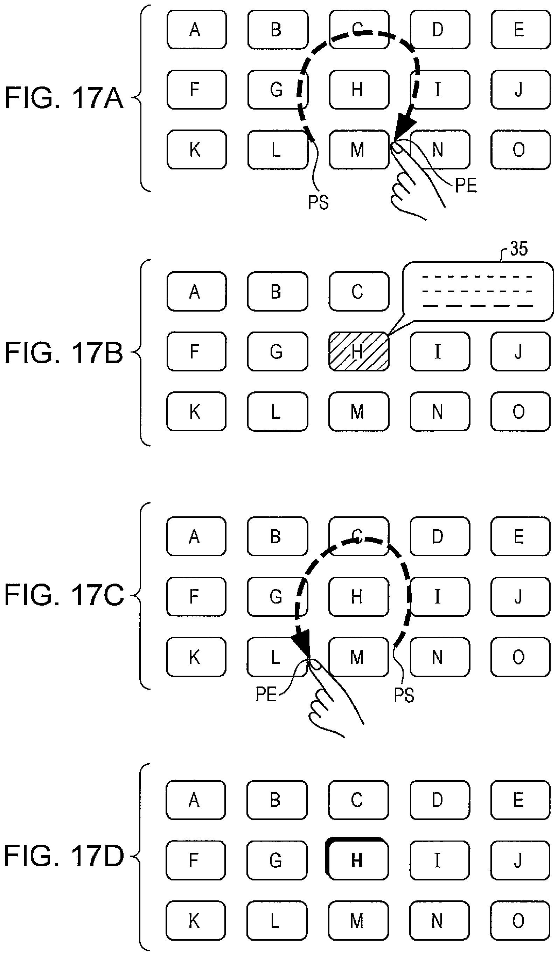

Figs. 17A to 17D show another example.

Fig. 17A shows a user operation of tracing the circumference of the object H along the track in the clockwise direction as shown by the arrow of the wavy line.

Since the track is in the clockwise direction in this case, the CPU 11 recognizes in Step F121 that the operation is a selecting operation for the object H which is present at the gravity center and highlights and displays the object H as shown in Fig. 16B. Here, an example is shown in which the function explanation 35 is also displayed.

On the other hand, Fig. 17C shows a case in which the user performs the input operation along the track in the counterclockwise direction as shown by the arrow of the wavy line.

Since the track is in the counterclockwise direction in this case, the CPU 11 determines that the user operation is a finalization operation and executes the function allotted to the object H while it is determined that finalization is performed on the object H which is present at the gravity center position in Step F121.

As described above, a configuration is applicable in which the content of the operation can be distinguished such that the operation in the clockwise direction is for "selecting" and the operation in the counterclockwise direction is for "finalization". It is a matter of course that not only "selecting" and "finalization" but other various contents of operations can be allotted to the operation in the clockwise direction and in the counterclockwise direction.

Moreover, it can also be considered that the distinction is made based on the track in the rising tendency or in the falling tendency or based on the track in the leftward tendency or in the rightward tendency, in relation to the directionality.

Furthermore, it can also be considered that the distinction is made based on the shape determined from the combination of the directionalities of the tracks. For example, the content of the operation may be determined based on the difference in shapes of the tracks of the sequential input operation, which is a substantially circular shape, a substantially triangular shape, a substantially V shape, or the like.

If the content of the operation is determined based on the directionality of the track of the user input operation as described above, it is possible to make the operations such as a single selection, a plural selection, and the like in the example in Figs. 16A to 16D, for example, which are difficult in the cursor UI in the related art possible, and various contents of operations can be provided to the user as in the example in Figs. 17A to 17D.

### <6. Program>

The program according to an embodiment of the present disclosure is a program which causes a computation processing apparatus such as the CPU 11 or the like to execute the processing in Fig. 5, 9, or 15.

According to this program, it is possible to realize the input processing apparatus which can obtain the aforementioned effects without using any specially dedicated apparatus. Accordingly, it is possible to easily mount the input processing apparatus of the present disclosure on the various kinds of devices described as the electronic device 10 in Fig. 2.

Moreover, according to the program recording medium recording such a program, it is possible to easily realize a device provided with functions as the input processing apparatus of the present disclosure in various kinds of electronic device 10.

The program of this embodiment can be recorded in advance in the HDD as a recording medium installed in one of various electronic devices such as a personal computer and the like, a ROM or the like in the microcomputer provided with a CPU.

Alternatively, the program can temporarily or permanently be stored (recorded) on a removable recording medium such as a flexible disc, a CD-ROM (Compact Disc Read Only Memory), an MO (Magnet Optical) disc, a DVD (Digital Versatile Disc), a Blu-ray Disk (registered trademark), a magnetic disk, a semiconductor memory, a memory card, or the like. Such a removable recording medium can be provided as a so-called package software.

In addition, it is also possible to download the program of the present disclosure from a download site via a network such as a LAN (Local Area Network), the Internet, or the like as well as installing the program from the removable recording medium to a personal computer or the like.

### <7. Modified Example>

The technique of the present disclosure is not limited to the example of the aforementioned embodiments, and various modified examples can be considered. The description has been given of the first and second embodiments in which the technique of the present disclosure is applied to the input operation for the selecting operation. However, it is a matter of course that the first and second embodiments can also be applied to the operation for the finalization (entering) operation and the operation for another content of operation.

By the processing of the embodiments, it is also possible to determine pressing of an object and holding the state. For example, when the user presses a certain point on the screen and holds the state, each set of coordinate values to be stored is not significantly changed. In this case, the CPU 11 may determine that the user is pressing an object and holding the state and recognize that the pressing and holding operation is completed when a predetermined time period passes or when the finger of the user is separated. That is, the CPU 11 may perform processing on the assumption that an operation of the functional content corresponding to pressing and holding has been performed on the object corresponding to the set of coordinate values of pressing and holding.

In addition, the description has been made of the embodiments as examples of the touch panel scheme in which the user touches a screen with the finger. However, the technique of the present disclosure can be applied to various UIs on which the input is performed so as to designate a position on the display screen.

For example, it is possible to apply the technique of the present disclosure to an input scheme in which the finger of the user is made to approach the screen, an input scheme in which a position on the screen is pointed with a pen-type pointer, an input scheme in which the screen is irradiated with a light beam with an optical pointing device to indicate the position on the screen, a mouse-type input scheme, and the like.

In addition, it is possible to employ the following configuration for this technique.
(1) An input processing apparatus including:
   an input detection unit which detects an input to a display screen and obtains input position information;
   a storage unit which stores the input position information; and
   an input target recognition unit which successively calculates an input target position or an input target area on the display screen based on each item of the input position information stored in the storage unit during the input from the start to the end of a sequential input operation on the display screen and recognizes an input target position or an input target area calculated at the time point when an input operation is completed as an input target position or an input target area by the sequential input operation.
(2) The input processing apparatus according to (1), further including:
   a display control unit which executes display on the display screen in response to an input operation during the input.
(3) The input processing apparatus according to (2),
   wherein the display control unit controls execution of display showing an operation track recognized by the input target recognition unit from each item of input position information by a sequential input operation, as the display in response to the input operation.
(4) The input processing apparatus according to (2) or (3),
   wherein the display control unit controls execution of display showing an input target position recognized by the input target recognition unit from each item of input position information by a sequential input operation, as the display in response to the input operation.
(5) The input processing apparatus according to (4),
   wherein the display control unit executes display showing a gravity center position as an input target position, as the display showing the input target position.
(6) The input processing apparatus according to (4) or (5),
   wherein the display control unit executes display showing an object corresponding to an input target position, as the display showing the input target position.
(7) The input processing apparatus according to any one of (2) to (6),
   wherein the display control unit controls execution of display showing an input target area recognized by the input target recognition unit from each item of input position information by a sequential input operation, as the display in response to the input operation.
(8) The input processing apparatus according to (7),
   wherein the display control unit executes display showing an object included in an input target area, as the display showing the input target area.
(9) The input processing apparatus according to any one of (1) to (8), wherein the input target recognition unit calculates a gravity center position, which is obtained from each item of input position information stored in the storage unit, as the input target position.
(10) The input processing apparatus according to any one of (1) to (9),
   wherein the input target recognition unit calculates an area obtained by connecting each item of input position information stored in the storage unit as the input target area.
(11) The input processing apparatus according to any one of (1) to (10), further including: an operation content determination unit which determines that a content of the sequential input operation is a selecting operation of an object corresponding to an input target position or an object included in an input target area calculated by the input target recognition unit at the time point when an input operation is completed.
(12) The input processing apparatus according to any one of (1) to (11), further including:
   an operation content determination unit which determines a content of the sequential input operation based on an input target position or an input target area, which is calculated at the time point when an input operation is completed, and a directionality,
   wherein the input target recognition unit further detects by the input target recognition unit the directionality of the sequential input operation from each item of the input position information stored in the storage unit by the sequential input operation.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
a display control unit that controls a display to display a plurality of objects; and
an input target recognition unit that iteratively calculates an input target on the display based on a plurality of positions corresponding to an input received from a start position of the input to a current position of the input.

2. The information processing apparatus of claim 1, wherein the current position of the input corresponds to an end position of the input.

3. The information processing apparatus of claim 1, wherein the current position of the input corresponds to an intermediate position of the input between the start position of the input and an end position of the input.

4. The information processing apparatus of anyone of claims 1 to 3, further comprising:
an input detection unit that detects the input and obtains the plurality of positions corresponding to the input.

5. The information processing apparatus of claim 4, further comprising:
a memory that stores the plurality of positions corresponding to the input provided by the input detection unit.

6. The information processing apparatus of claim 5 or 6, wherein the input target recognition unit acquires the plurality of positions corresponding to the input from the memory.

7. The information processing apparatus of anyone of claims 1 to 6, wherein the display control unit controls the display based on the input target calculated by the input target recognition unit.

8. The information processing apparatus of claim 7, wherein the display control unit controls the display to display an indication of the calculated input target area.

9. The information processing apparatus of claim 7 or 8, wherein the display control unit controls the display to highlight at least one of the plurality of objects based on the calculated input target area.

10. The information processing apparatus of anyone of claims 1 to 9, wherein the input target recognition unit calculates the input target by calculating a point having a predetermined geometric relationship with the plurality of positions corresponding to the input.

11. The information processing apparatus of claim 10, wherein the predetermined geometric relationship is defined by a center of gravity of the plurality of positions corresponding to the input.

12. The information processing apparatus of claim 11, wherein the display control unit controls the display to display an indication of the input target on the display based on the center of gravity of the plurality of positions corresponding to the input.

13. The information processing apparatus of claim 11 or 12, wherein the display control unit controls the display to highlight one or more of the plurality of objects based on the center of gravity of the plurality of positions corresponding to the input.

14. The information processing apparatus of anyone of claims 1 to 13, wherein the input target recognition unit calculates the input target area based on a shape formed by connecting the plurality of positions corresponding to the input.

15. The information processing apparatus of claim 14, wherein the display control unit controls the display to highlight at least one of the plurality of objects included within the shape formed by connecting the plurality of positions corresponding to the input.

16. The information processing apparatus of claim 14 or 15, wherein the display control unit controls the display to highlight at least one of the plurality of objects included within the shape formed by connecting the plurality of positions corresponding to the input or displayed on a border of the shape formed by connecting the plurality of positions corresponding to the input.

17. The information processing apparatus of anyone of claims 1 to 16, wherein the display control unit controls the display to display a line tracing the input from the start of the input to the current position of the input.

18. The information processing apparatus of anyone of claims 1 to 17, wherein the input target recognition unit determines a directionality of the input based on the plurality of positions corresponding to the input received from the start of the input to the current position of the input.

19. The information processing apparatus of claim 18, wherein the input target recognition unit calculates the input target area based on a directionality of the input.

20. An information processing method performed by an information processing apparatus, the method comprising:
controlling a display to display a plurality of objects; and
iteratively calculating, by a processor of the information processing apparatus, an input target on the display based on a plurality of positions corresponding to an input received from a start of the input to a current position of the input.

21. A computer-readable medium including computer program instructions, which when executed by an information processing apparatus, cause the information processing apparatus to perform a method comprising:
controlling a display to display a plurality of objects; and
iteratively calculating an input target on the display based on a plurality of positions corresponding to an input received from a start of the input to a current position of the input.
